# EUROPÄISCHE PATENTSCHRIFT

(11) **EP 3 176 971 B1**
(45) Veröffentlichungstag und Bekanntmachung des Hinweises auf die Patenterteilung: **24.02.2021**
(21) Anmeldenummer: 16188690.8
(22) Anmeldetag: 14.09.2016
(51) Int. Cl.: H04L 1/18, H04L 1/00

(54) **VERFAHREN ZUM ÜBERMITTELN VON EMPFANGSBESTÄTIGUNGEN BEI BROAD- ODER MULTICAST-KOMMUNIKATION**
METHOD FOR TRANSMITTING RECEPTION CONFIRMATIONS IN BROAD OR MULTICAST COMMUNICATION
PROCÉDÉ DE TRANSMISSION D'ACCUSÉS DE RÉCEPTION POUR LA COMMUNICATION EN BANDE LARGE OU À DIFFUSION GROUPÉE

(30) Priorität: 30.11.2015 DE 102015120708
(43) Veröffentlichungstag der Anmeldung: 07.06.2017
(73) Patentinhaber: Insta GmbH, 58509 Lüdenscheid (DE)
(72) Erfinder: Groll, Roland, 58507 Lüdenscheid (DE); Neuhaus, Stefan, 44289 Dortmund (DE); Frey, Hannes, 56077 Koblenz (DE); Funke, Rafael, 56068 Koblenz (DE)

(56) Entgegenhaltungen:
- YAODA LIU ET AL: "Reliable Broadcast in Error-Prone Multi-Hop Wireless Networks: Algorithms and Evaluation", GLOBAL TELECOMMUNICATIONS CONFERENCE, 2007. GLOBECOM '07. IEEE, IEEE, PISCATAWAY, NJ, USA, 1. November 2007 (2007-11-01), Seiten 5329-5334, XP031196938, ISBN: 978-1-4244-1042-2

## Beschreibung

Die Erfindung betrifft ein Verfahren zum Übermitteln von Empfangsbestätigungen bei einer Broad- oder Multicast-Kommunikation in einem, insbesondere drahtlosen Multi-Hop-Netz, bei welchem Verfahren von jedem Netzteilnehmer nach Ablauf einer zufällig gewählten Verzögerungszeit eine Empfangsbestätigung gesendet wird.

In Multi-Hop-Netzen kann von jedem Netzteilnehmer ein Datenpaket als Nachricht oder Befehl in Abhängigkeit von dem oder den gewünschten Empfängern als Unicast-, Multicast-, oder Broadcast-Kommunikation gesendet werden. Zum Überprüfen, ob die Kommunikation erfolgreich war, sendet jeder durch eine solche Kommunikation angesprochene Netzteilnehmer eine Empfangsbestätigung, die der die Kommunikation sendende Netzteilnehmer als Ursprungs-Netzteilnehmer empfangen soll. Bei einer Broadcast-Kommunikation, durch die somit alle Netzteilnehmer angesprochen sind, müssen zur Bestätigung des Erhaltes der Kommunikation sämtliche Netzteilnehmer eine Empfangsbestätigung absetzen, die über das Netz dem Ursprungs-Netzteilnehmer zugeführt wird. Bei einer Multicast-Kommunikation senden nur die durch die Kommunikation angesprochenen Netzteilnehmer eine Empfangsbestätigung. In beiden Fällen handelt es sich bei der Empfangsbestätigung um eine Unicast-Nachricht, die vom jeweiligen Empfänger zurück zum Ursprungs-Netzteilnehmer gesendet wird. Grundsätzlich können Unicast-Nachrichten in Multi-Hop-Netzen per Unicast-Nachrichten geroutet werden, also entlang eines Pfades multi-Hop von Teilnehmer zu Teilnehmer (z.B. mittels Routing-Tabellen) oder per Broadcast-Nachrichten, so dass die Nachricht den Ursprungsknoten mehrfach über redundante Pfade erreicht. Insbesondere sei hier das Flooding genannt, bei dem die Datenpaketübermittlung durch Weitergabe der von einem Netzteilnehmer empfangenen Datenpakete an alle seine Nachbarn erfolgen. Dabei ist vorgesehen, dass jeder Netzteilnehmer ein empfangenes Datenpaket nur einmal weiterleitet. Während dieses bei dem Verbreiten eines Datenpaketes durch Broadcast (gleiches gilt für Multicast) unproblematisch ist, da die Kommunikation von einem einzigen Netzteilnehmer - dem Ursprungs-Netzteilnehmer - ausgeht, kann vor allem bei Netzen mit einer größeren Anzahl an Netzteilnehmern die Weiterleitung der von jedem Netzteilnehmer gesendeten Empfangsbestätigung zu Problemen, insbesondere zu einer Überlastung der Netzkommunikation führen.

Zur Vereinfachung der Organisation eines solchen Multi-Hop-Netzes wird die Kommunikation typischerweise als Broadcast durch Flooding sowohl beim Senden der Kommunikation vom Ursprungs-Teilnehmer an die designierten Netzteilnehmer als auch bei der Kommunikation der von den designierten Netzteilnehmern gesendeten Empfangsbestätigungen verwendet.

Eine gewisse Entzerrung im Senden der Empfangsbestätigungen der einzelnen Netzteilnehmer versucht man dadurch zu erreichen, dass die Netzteilnehmer ihre Empfangsbestätigung zu möglichst unterschiedlichen Zeiten senden. In Infrastruktur-Netzen kann hierfür jedem Netzteilnehmer beispielsweise ein Zeitslot zugewiesen werden, wie etwa im Rahmen eines Time Division Multiple Access (TDMA). Bei infrastrukturlosen Multi-Hop-Netzen ist dies aber nicht ohne weiteres möglich. Dort ist es zweckmäßiger, dass Netzteilnehmer mit zufällig gewählten Verzögerungszeiten zur Kollisionsauflösung arbeiten. Hierfür kann ein Carrier Sense Multiple Access (CSMA) verwendet werden. Zu diesem Zweck kann mit dem Empfang eines einem Broadcast oder Multicast zugehörigen Datenpakets ein Timer mit einer zufällig ausgewählten Verzögerungszeit gesetzt werden, um die Empfangsbestätigung erst nach Ablauf der Verzögerungszeit zu senden. Erreicht wird hierdurch, dass die einzelnen Netzteilnehmer ihre Empfangsbestätigung mit sehr hoher Wahrscheinlichkeit nicht gleichzeitig senden, wobei die Abstände in den zufällig gewählten Verzögerungszeiten voneinander so gewählt sind, dass zwischen dem Senden einer ersten Empfangsbestätigung und einer darauf folgenden im Erwartungswert eine hinreichende Zeitspanne ist, bis die Empfangsbestätigung des zuerst sendenden Teilnehmers an den Ursprungs-Netzteilnehmer übermittelt worden ist. Bei Netzen mit einer größeren Anzahl an Netzteilnehmern ist ein solches Verfahren nicht praktikabel, da die Reaktionszeit, bis ein eine Kommunikation sendender Teilnehmer die Bestätigung von allen, durch die Kommunikation angesprochenen Netzteilnehmern erhalten hätte, zu lang wäre. Anderenfalls kann das Phänomen auftreten, dass ein Netzteilnehmer mit seinen erfolglosen Sendeversuchen auf das Medium nicht zugreifen kann und somit nach einer typischerweise maximalen Anzahl von Versuchen, den Senderversuch einstellt und somit keine Nachricht in das Netzwerk übermitteln wird.

Ein solches Verfahren ist in Yaoda Liu et al: "Reliable Broadcast in Error-Prone Multi-Hop Wireless Networks: Algorithms and Evaluation", Global Telecommunications Conference, 2007. Globecom '07. IEEE, IEEE, Piscataway, NJ, USA, Seiten 5329-5334, 1. November 2007 (2007-11-01) beschrieben.

Bei diesen vorbekannten Empfangsbestätigungsverfahren wartet der Ursprungs-Netzteilnehmer eine ausreichend lange Zeit, damit er auch im Falle der unvermeidbaren Kollisionen die Empfangsbestätigungen aller designierter, also: von ihm angesprochenen Netzteilnehmer erhält, um die übertragene Kommunikation als erfolgreich übertragen verbuchen zu können. Bei drahtlos ausgelegten Multi-Hop-Netzen kann es vorkommen, dass von einem oder mehreren Netzteilnehmern der Ursprungs-Netzteilnehmer eine Empfangsbestätigung wegen Abschattung oder Kollision in der Übertragung nicht erhält. In solchen Fällen sendet der Ursprungs-Netzteilnehmer nach Ablauf der Wartezeit die Kommunikation nochmals aus, woran sich das vorbeschriebene Empfangsbestätigungsverfahren in vollem Umfange nochmals anschließt.

Ausgehend von diesem diskutierten Stand der Technik liegt der Erfindung daher die Aufgabe zugrunde, ein Verfahren der eingangs genannten Art dergestalt weiterzubilden, dass auch mit den in einem drahtlos, insbesondere auch infrastrukturlos betriebenen Multi-Hop-Netz zur Verfügung stehenden Ressourcen eine sichere Empfangsbestätigung der durch die Kommunikation angesprochenen Netzteilnehmer bei einer Broadcast- oder einer Multicast-Kommunikation in akzeptabler Zeit und ohne drohende Netzüberlastung durchgeführt werden kann, vor allem auch dann, wenn die Kommunikation durch Flooding das Multi-Hop-Netz transportiert wird und auch die designierten Netzteilnehmer ihrerseits ein Flooding verwenden, um Empfangsbestätigungsnachrichten auszubringen.

Gelöst wird diese Aufgabe erfindungsgemäß durch ein eingangs genanntes, gattungsgemäßes Verfahren mit den weiteren Merkmalen des Anspruchs 1.

Im Unterschied zu vorbekannten Verfahren wird bei diesem Verfahren davon ausgegangen, dass die Broad- oder Multicast-Kommunikation vom Ursprungsnetzteilnehmer mehrfach ausgesendet werden kann. Dieses erfolgt dann, wenn nicht von allen designierten Empfängern eine Empfangsbestätigung erhalten wurde. Von Besonderheit bei jedem weiteren Iterationsschritt des Sendens der Kommunikation ist, dass durch diese weitere Kommunikation nur Empfangsbestätigungen derjenigen designierten Netzteilnehmer eingefordert werden, von denen der Ursprungs-Netzteilnehmer noch keine Empfangsbestätigung erhalten hat.

Das erfindungsgemäße Verfahren folgt dem Ansatz, die Kommunikation mehrfach zu senden, jedoch an dem Empfangsbestätigungsverfahren regelmäßig nur diejenigen Netzteilnehmer teilhaben zu lassen, von denen der Ursprungsnetzteilnehmer noch keine Empfangsbestätigung erhalten hat. Zu diesem Zweck wird mit jedem Iterationsschritt mit dem Senden der Kommunikation die zusätzliche Information gesendet, von welchem Netzteilnehmer der Ursprungs-Netzteilnehmer in dem einen oder in den mehreren vorangegangen Iterationsschritten bereits eine Empfangsbestätigung erhalten hat. Das Empfangsbestätigungsverfahren wird vorzugsweise derart durchgeführt, dass nicht nur, diejenigen Netzteilnehmer antworten, von denen der Ursprungs-Netzteilnehmer noch keine Empfangsbestätigung erhalten hat, sondern auch diejenigen Netzteilnehmer, von denen der Ursprungs-Netzteilnehmer zwar bereits eine eigene Empfangsbestätigung erhalten hat, die vorzugsweise in einem Cache aber evtl. noch eine Empfangsbestätigung zumindest eines weiteren Netzteilnehmers gespeichert haben, die der Ursprungs-Netzteilnehmer noch nicht erhalten hat. Dieses setzt voraus, dass jeder Netzteilnehmer, und zwar unabhängig davon, ob es sich um einen designierten Netzteilnehmer handelt oder nicht, Empfangsbestätigungen, die er von anderen Netzteilnehmern erhält, in einem hierfür geeigneten Speicher ablegt. Vorzugsweise wird man hierfür einen Speicher wählen, der nach einer vorbestimmten Strategie überschrieben und/oder gelöscht wird. Hierfür eignet sich ein Cache.

Die Iteration, umfassend das erneute Senden der Kommunikation zusammen mit der zusätzlichen Information, das Setzen eines Ablaufzeitpunktes durch den Ursprungs-Netzteilnehmer und das sich an das Senden anschließende Empfangsbestätigungsverfahren, wird solange fortgesetzt, bis der Ursprungs-Netzteilnehmer eine Empfangsbestätigung von jedem von der Kommunikation angesprochenen Netzteilnehmer erhalten hat. In gleicher Weise kann auch bei den designierten Netzteilnehmern ein Ablaufzeitpunkt gesetzt werden, nach dem dieser Netzteilnehmer keine Empfangsbestätigung mehr sendet oder weiterleitet. Alternativ oder als Rückfallbedingung, für den Fall, dass der Ursprungs-Netzteilnehmer nicht von allen Netzteilnehmern eine Empfangsbestätigung erhält, kann vorgesehen sein, die Iterationsschritte in einer vorgegebenen Maximalanzahl durchzuführen. Diese Anzahl kann statisch vorgegeben sein. Möglich ist es auch, die vorgegebene Anzahl der bis zum Abschluss dieses Verfahrens noch durchzuführenden Iterationsschritte an die Ergebnisse von einer bestimmten Anzahl zuvor durchgeführter Iterationsschritte zu koppeln. Zusätzlich kann auch vorab Zeit definiert worden sein, die dem Ursprungs-Netzteilnehmer zur Verfügung steht, um das Verfahren durchzuführen. Eine solche Zeit kann beispielsweise durch eine Applikationsanforderung z.B. im Sinne einer maximal zulässigen Reaktionszeit bestimmt sein.

Durch diese Maßnahme wird in einer bevorzugten Ausgestaltung des Verfahrens der Ablaufzeitpunkt, den sich der Ursprungs-Netzteilnehmer setzt so bemessen, dass der Ursprungs-Netzteilnehmer innerhalb dieser Zeit die Empfangsbestätigungen der designierten Netzteilnehmer nach einem ersten Senden der Kommunikation nicht erhalten kann. Mithin wird im Unterschied zu vorbekannten Verfahren der Ablaufzeitpunkt sehr viel kürzer gewählt. Diese Ausgestaltung des Verfahrens nutzt in geschickter Art und Weise den Umstand, dass in einer ersten Zeitspanne der Übermittlung von Empfangsbestätigungen der Ursprungs-Netzteilnehmer eine relativ hohe Anzahl an Empfangsbestätigungen pro Zeiteinheit empfängt. Dieses erfolgt dadurch, dass der Ursprungs-Netzteilnehmer für den Empfang von Empfangsbestätigungen aller, durch die Kommunikation angesprochener Netzteilnehmer bereit ist, in der mit einer relativ hohen Anzahl an eingehenden Empfangsbestätigungen pro Zeiteinheit gerechnet werden kann. Wie lange diese Zeitspanne bemessen ist, ist von der Struktur und der Größe des Multi-Hop-Netzes abhängig. Bei dieser Verfahrensausgestaltung wird somit im Unterschied zu herkömmlichen Verfahren, bei dem dieses Zeitfenster solange geöffnet ist, bis zumindest theoretisch die Empfangsbestätigung aller durch die Kommunikation angesprochenen Netzteilnehmer erhalten worden ist, ein völlig anderer Weg beschritten.

Durch dieses Verfahren wird nicht nur die Netzlast vor allem bei dem Empfangsbestätigungsverfahren signifikant reduziert, und zwar vor allem dadurch, dass bei jeder neuen Iteration von immer weniger Netzteilnehmern Empfangsbestätigungen eingefordert werden. Bei vorbekannten Verfahren werden bei jedem Wiederholungsschritt, sollte es hierzu kommen, Empfangsbestätigungen von allen designierten Netzteilnehmern eingefordert. Vielmehr wird durch das wiederholte/redundante Senden der Kommunikation zugleich sichergestellt, dass alle Netzteilnehmer die Kommunikation tatsächlich auch erhalten. Bei diesem Verfahren hat der Nichtempfang der Kommunikation durch einen Netzteilnehmer, etwa durch einen Übertragungsfehler keine Verfahrensverzögerung zur Folge, jedenfalls dann nicht, wenn der Nichtempfang der Kommunikation nicht auf ein einen dauerhaften Nichtempfang verursachendes Problem, wie beispielsweise bei einer drahtlosen Auslegung des Multi-Hop-Netzes durch längerfristige Abschattung einer oder mehrere Netzteilnehmer bedingt ist. Auch dieses trägt zu einer Reduzierung der für die Durchführung einer solchen Kommunikation notwendigen Zeit bei. Somit zeigt sich, dass im Unterschied zu der herrschenden Lehre, die Broad- oder Multicast-Kommunikation mit dem sich darin anschließenden Empfangsbestätigungsverfahren so selten wie möglich zu senden, bei dem erfindungsgemäßen Verfahren durch das in der vorbeschriebenen Art und Weise bewusste mehrfach wiederholte Senden der Kommunikation nicht nur die Gefahr einer Netzüberlastung sondern vor allem auch die Zeitspanne, bis der Ursprungs-Netzteilnehmer eine Empfangsbestätigung von allen von ihm durch die Kommunikation angesprochenen Netzteilnehmer erhält, signifikant reduziert ist.

Die zusätzliche Information wird durch den Ursprungs-Netzteilnehmer gemäß einem bevorzugten Ausführungsbeispiel in Form einer Datenstruktur, die vorzugsweise eine Bitmaske enthält, zur Verfügung gestellt. Eine solche Bitmaske enthält die Adressinformation oder eine andere Information zur Identität eines Netzteilnehmers aller Netzteilnehmer des Multi-Hop-Netzes. In dieser Bitmaske sind diejenigen Netzteilnehmer markiert, von denen der Ursprungs-Netzteilnehmer eine Empfangsbestätigung in dem oder den vorangegangenen Iterationsschritten erhalten hat. Bei dem ersten Senden der Kommunikation ist die Bitmaske der Datenstruktur diesbezüglich noch leer.

Vorzugsweise ist die Datenstruktur dergestalt ausgelegt, dass in dieser als zusätzliche Information auch die laufende Nummer des Iterationsschrittes enthalten ist. Dieses wird gemäß einem bevorzugten Ausführungsbeispiel vorgenommen, damit die durch diese Kommunikation angesprochenen Netzteilnehmer die Kommunikation von denjenigen anderer Iterationsschritte unterscheiden können. Anhand dieser Informationen können die Netzteilnehmer die Iterationsschritte mitverfolgen und empfangene Empfangsbestätigungen anderer Netzteilnehmer daraufhin bewerten, ob diese bereits von dem jeweiligen Netzteilnehmer in einem früheren Iterationsschritt empfangen worden sind.

Eine weitere Reduzierung der Netzlast bei dem Empfangsbestätigungsverfahren lässt sich dadurch erreichen, dass jeder designierte Netzteilnehmer ähnlich dem Ursprungs-Netzteilnehmer mit dem erstmaligen Empfang der Kommunikation in jedem Iterationsschritt mit dem Empfang der Kommunikation einen Ablaufzeitpunkt setzt, nach dessen Ablauf dieser Netzteilnehmer seine Beteiligung an dem weiteren Flooding der Kommunikation und dem Empfangsbestätigungsverfahren beendet. Durch diese Maßnahme wird erreicht, dass nach Ablauf der Ablaufzeit in dem Ursprungs-Netzteilnehmer bei entsprechender Bemessung des Ablaufzeitpunktes der Netzteilnehmer die Netzkommunikation in Bezug auf die zuvor gesendete Kommunikation einschließlich des diesbezüglichen Empfangsbestätigungsverfahrens beendet wird. Der Ablaufzeitpunkt der Netzteilnehmer ist vorzugsweise so angelegt, damit die im Zusammenhang mit dem Flooding der Kommunikation und dem daraufhin einsetzenden Empfangsbestätigungsverfahren generierte Netzlast jedenfalls weitestgehend beendet ist, bevor der Ursprungs-Netzteilnehmer im Zuge des nächsten Iterationsschrittes die Broadcast- oder Multicast-Kommunikation erneut sendet.

Die Bemessung der Ablaufzeitspanne im Ursprungs-Netzteilnehmer kann bei diesem Verfahren sogar deutlich geringer sein als die sich aus Laufzeit der Kommunikation auch über mehrere Hops zu den Netzteilnehmern und der maximalen Verzögerungszeit festgelegt werden. Die mehrfache Iteration und das Empfangsbestätigungsverfahren erlauben, dass eine Empfangsbestätigung von einem vom Ursprungs-Netzteilnehmer hinsichtlich seiner Laufzeit und/oder seiner zum Erreichen des Ursprungs-Netzteilnehmers notwendigen Hops bei jeder Iteration näher an den Ursprungs-Netzteilnehmer heranarbeitet, bis diese den Ursprungs-Netzteilnehmer erreicht. Ermöglich wird dieses dadurch, dass ein Netzteilnehmer in seinem Cache als bevorzugter Empfangsbestätigungsspeicher auch nach Ablauf des Ablaufzeitpunktes die darin abgelegten Empfangsbestätigungen anderer Netzteilnehmer beibehält, die sodann mit der nächsten Iteration im Wege des Empfangsbestätigungsverfahrens gesendet werden, wenn in der mit dem weiteren Iterationsschritt gesendeten zusätzlichen Information erkannt wird, dass der Ursprungs-Netzteilnehmer zu dem Netzteilnehmer, dessen Empfangsbestätigung in dem Cache gespeichert ist, noch keine Empfangsbestätigung seitens des Ursprungs-Netzteilnehmers empfangen worden ist.

Die Netzlast lässt sich bei der Durchführung des Empfangsbestätigungsverfahrens durch eine Aggregation von Empfangsbestätigungen reduzieren. Besonders bevorzugt wird ein solches Aggregationsverfahren, mit dem die Empfangsbestätigungen mit jeder Weitergabe in den benachbarten Netzteilnehmer aggregiert werden, durchgeführt,
- indem jeder Netzteilnehmer während der laufenden Verzögerungszeit empfangene Empfangsbestätigungen anderer Netzteilnehmer daraufhin untersucht, ob darin eine Absenderinformation enthalten ist, die dieser Netzteilnehmer noch nicht erhalten hat, und wenn eine solche empfangene Empfangsbestätigung eine neue Absenderinformation enthält, die neue Absenderinformation in einem Empfangsbestätigungsabsenderspeicher abgelegt sowie eine neue, zufällig gewählte Verzögerungszeit zum Senden der eigenen Empfangsbestätigung gesetzt wird, wobei sich dieser Vorgang mit jeder während der aktuell laufenden Verzögerungszeit empfangenen Empfangsbestätigung eines anderen Netzteilnehmers wiederholt,
- indem mit Ablauf der laufenden Verzögerungszeit dieser Netzteilnehmer eine Empfangsbestätigung sendet, die seine eigene Adressinformation und die in seinem Empfangsbestätigungsabsenderspeicher abgelegte Absenderinformation beinhaltet und
- indem eine neue zufällig ausgewählte Verzögerungszeit im Rahmen der aktuell laufenden Empfangsbestätigungsübermittlung nur dann gesetzt und eine weitere Empfangsbestätigung gesendet wird, wenn nach dem Senden der ersten eigenen Empfangsbestätigung eine Empfangsbestätigung eines anderen Netzteilnehmers mit neuer Absenderinformation empfangen wird, wobei sich in einem solchen Falle die vorherigen Schritte wiederholen.

Eine Absenderinformation bezeichnet im Rahmen dieser Ausführungen die Menge von einer oder mehreren Teilnehmeradressen, die den Empfang bestätigt haben.

Bei dieser Verfahrensausgestaltung ist vorgesehen, dass jeder durch eine Kommunikation angesprochene Netzteilnehmer nach einer zufällig gewählten Verzögerungszeit eine Empfangsbestätigung sendet, die zumindest die eigene Absenderinformation beinhaltet. Sollte das Netz auch Netzteilnehmer umfassen, die aufgrund eines sehr energiesparend arbeitenden Modus keine Empfangsbestätigung senden, arbeiten diese nicht nach dem im Rahmen dieser Ausführungen beschriebenen Verfahren. Insofern bezieht sich diese vorteilhafte Ausgestaltung des Verfahrens nur auf solche Netzteilnehmer, die ausgelegt sind, nach Erhalt einer Kommunikation eine Empfangsbestätigung zu senden. Sehr energiesparende Knoten können sich mithilfe eines Stellvertreterknotens an dem Verfahren beteiligen. Aufgrund des zeitlich zueinander versetzten Sendens der Empfangsbestätigung durch die Netzteilnehmer wird tatsächlich nur einer oder es werden nur wenige Netzteilnehmer als Empfangsbestätigung ausschließlich ihre eigene Absenderinformation senden. Vielmehr ist bei diesem Konzept vorgesehen, dass jeder Netzteilnehmer, der in der Zeitspanne der laufenden Verzögerungszeit eine Empfangsbestätigung eines anderen Netzteilnehmers erhält, seinen Empfangsbestätigungsabsenderspeicher daraufhin überprüft, ob eine in der empfangenen Empfangsbestätigung enthaltene Absenderinformation darin bereits abgelegt ist. Insofern akkumuliert ein Netzteilnehmer in der laufenden Verzögerungszeit zum Senden seiner eigenen Empfangsbestätigung die Empfangsbestätigungen, die er von benachbarten Netzteilnehmern erhält mit den darin enthaltenen Absenderinformationen. Wird bei dieser Überprüfung festgestellt, dass der eine solche Empfangsbestätigung empfangende Netzteilnehmer eine darin enthaltene Absenderinformation noch nicht kennt, wird der Timer mit einer neuen zufällig gewählten Verzögerungszeit gesetzt. Typischerweise wird jeder in Frage kommende Netzteilnehmer über einen einzigen Timer verfügen. Das Setzen der neuen, zufällig gewählten Verzögerungszeit erfolgt etwa durch Verwerfen der laufenden Verzögerungszeit und erneutes Starten des Timers mit der neuen Verzögerungszeit. Durchaus ist es auch möglich, eine laufende Verzögerungszeit zu stoppen und um die neue Verzögerungszeit zu verlängern. Ist die neue Verzögerungszeit abgelaufen, wird die Empfangsbestätigung von diesem Netzteilnehmer gesendet. Die dann gesendete Empfangsbestätigung umfasst nicht nur die eigene Absenderinformation, sondern auch die in seinem Empfangsbestätigungsabsenderspeicher abgelegte Absenderinformation anderer Netzteilnehmer. Auf diese Weise erfolgt somit eine zunehmende Aggregation der Absenderinformation von Netzteilnehmern, die den Empfang der zuvor gesendeten Kommunikation bestätigt haben.

Empfängt ein Netzteilnehmer hingegen eine Empfangsbestätigung mit Absenderinformation, die ihm bereits bekannt ist, wird kein Timer gesetzt und demzufolge das empfangene Datenpaket nicht weitergeleitet. Hierin ist die erhebliche weitere Reduzierung der im Rahmen der Empfangsbestätigungen durch das Multi-Hop-Netz zu übermittelnden Datenpaketen begründet. Ausgenutzt wird bei diesem Konzept, dass die Netzkommunikation nicht durch Datenpakete mit mehr Inhalt, sondern v. a. durch die Anzahl der zu übermittelnden Datenpakete begrenzt ist.

Ein Netzteilnehmer sendet gemäß dieser Weiterbildung nur dann eine weitere Empfangsbestätigung, wenn nach Senden einer ersten Empfangsbestätigung von diesem Netzteilnehmer eine Empfangsbestätigung empfangen wird, die eine neue, bisher von ihm noch nicht registrierte Absenderinformation enthält. Ist dieses der Fall, werden die vorbeschriebenen Schritte bis zum Senden einer weiteren Empfangsbestätigung wiederholt.

Die Vorteile dieses Konzeptes liegen, wie bereits angedeutet, in der signifikant reduzierten Anzahl an zu übermittelnden Empfangsbestätigungen. Der Vorteil dieses Verfahrens macht sich vor allem bei Netzen mit einer größeren Anzahl an Netzteilnehmern bemerkbar. Aus diesem Grunde eignet sich dieses Verfahren vor allem für einen Einsatz in Multi-Hop-Netzen mit einer größeren Netzteilnehmeranzahl, die durchaus auch mehrere hundert Teilnehmer umfassen können.

Das erfindungsgemäße Verfahren eignet sich vor allem zum Einsatz in infrastrukturlosen Netzen. Durchaus möglich ist eine Ausgestaltung auch, bei der in dem Multi-Hop-Netz hierarchische Strukturen implementiert sind, beispielsweise indem zumindest ein Netzteilnehmer als Cluster-Head eingerichtet ist, der die Mitglieder seines Clusters organisiert. Bei einer solchen Ausgestaltung sendet der als Cluster-Head eingerichtete Netzteilnehmer eine Empfangsbestätigung erst, wenn er von seinen Cluster-Mitgliedern eine Bestätigung über den Erhalt der Broadcast- oder Multicast-Kommunikation erhalten hat. Realisiert werden kann dieses dadurch, dass der Timer, nach dessen Ablauf die Empfangsbestätigung des Cluster-Heads gesendet wird, erst gestartet wird, wenn der Cluster-Head die Empfangsbestätigung seiner Cluster-Mitglieder voraussichtlich erhalten hat. Zudem kann der Cluster-Head als Koordinator fungieren und die Empfangsbestätigungen der Cluster-Mitglieder der Reihe nach abfragen oder im Vorhinein eine Sendereihenfolge festlegen.

Da durch das beschriebene Verfahren die Anzahl der im Netz zu übertragenden Datenpakete im Rahmen einer Empfangsbestätigung durch die durch eine Kommunikation angesprochenen Netzteilnehmer signifikant reduziert ist, kann die diesbezüglich frei gewordene Übertragungskapazität im Netz für andere Zwecke genutzt werden. Bei diesen anderen Zwecken kann es sich beispielsweise auch um eine Reparatur in der Kommunikation des gesendeten Broadcast oder Multicast handeln.

Nachfolgend ist die Erfindung anhand eines Ausführungsbeispiels unter Bezugnahme auf die beigefügten Figuren beschrieben. Es zeigen:
- **Fig. 1:**: In einer schematisierten Darstellung eines Ausschnitts eines Multi-Hop-Netzes zusammen mit einer Tabelle, darstellend, Maßnahmen, die von einzelnen Netzteilnehmern vorgenommen werden, zusammen mit einer mit dem Senden einer Kommunikation verwendeten Datenstruktur,
- **Fig. 2:**: eine Darstellung entsprechend derjenigen der Figur 1 beim Durchführen eines zweiten Iterationsschrittes,
- **Fig. 3:**: eine Darstellung entsprechend derjenigen der Figur 2 beim Durchführen eines dritten Iterationsschrittes,
- **Fig. 4:**: ein Diagramm zum schematisierten Darstellen der Anzahl der von einem Ursprungs-Netzteilnehmer empfangenen Empfangsbestätigungen pro Zeiteinheit, aufgetragen über der Zeit bei einem Empfangsbestätigungsverfahren gemäß dem Stand der Technik und
- **Fig. 5:**: ein Diagramm zum schematisierten Darstellen der Anzahl der von einem Ursprungs-Netzteilnehmer empfangenen Empfangsbestätigungen pro Zeiteinheit, aufgetragen über der Zeit bei einem Empfangsbestätigungsverfahren gemäß der Erfindung.

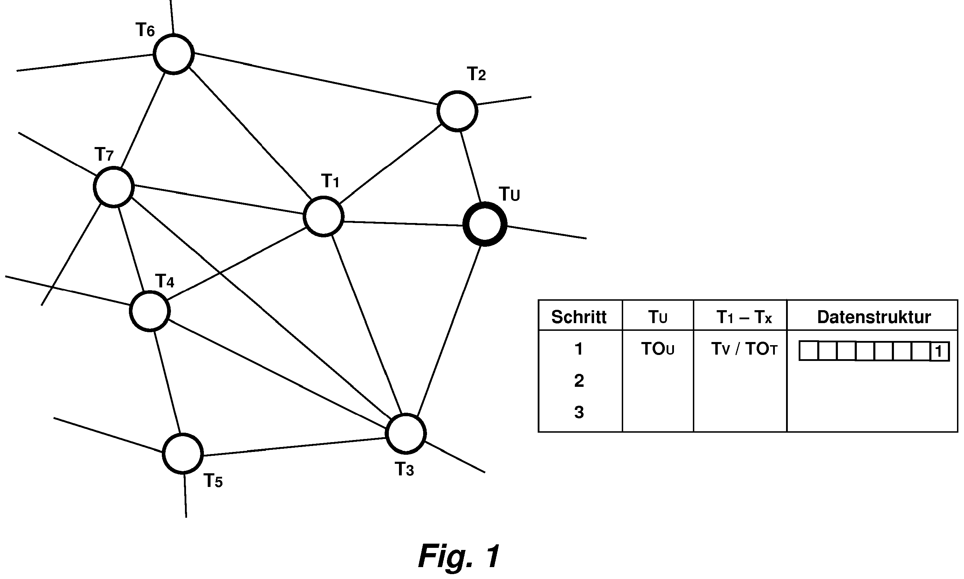

Ein Multi-Hop-Netz umfasst eine Vielzahl von Netzteilnehmern, von denen einige wenige des insgesamt sehr viel größeren Netzes in Figur 1 in Form von Kreisen dargestellt sind. Die Verbindungslinien, mit denen die Netzteilnehmer miteinander verbunden sind, stellen Kommunikationswege dar. Bei dem in den Figuren dargestellten Multi-Hop-Netz handelt es sich um ein drahtloses Netz. Das Netz ist infrastrukturlos.

Nachfolgend ist das erfindungsgemäße Verfahren zum Einsammeln von Empfangsbestätigungen sämtlicher Netzteilnehmer, soweit in den Figuren gezeigt, erläutert. Das Verfahren zielt darauf ab, in möglichst kurzer Zeit und ohne Netzüberlastung eine Kommunikation als Datenpaket erfolgreich zu den von der Kommunikation angesprochenen Netzteilnehmern zu erhalten.

In dem in den Figuren gezeigten Ausführungsbeispiel ist der Ursprungs-Netzteilnehmer mit T_{U} bezeichnet. Die übrigen Netzteilnehmer sind mit T sowie einem laufenden numerischen Index 1 ... 7 gekennzeichnet. Die Kommunikation, die der Ursprungs-Netzteilnehmer sendet, ist bei dem dargestellten Ausführungsbeispiel als Broadcast-Datenpaket ausgelegt. Gesendet wird dieses Datenpaket mehrfach, wie dieses nachstehend erläutert ist. Gesendet wird von dem Ursprungs-Netzteilnehmer T_{U} nicht nur die eigentliche Kommunikation, sondern auch eine Datenstruktur, die dergestalt aufgebaut ist, damit darin eine Adressinformation jedes Netzteilnehmers enthalten ist. In dem beispielhaft dargestellten Ausschnitt des Multi-Hop-Netzes sind in Form einer Bitmaske als Teil der Datenstruktur die sieben Netzteilnehmer T₁ bis T₇ angegeben. Die in der Tabelle der Figur 1 gezeigte Bitmaske umfasst somit 7 Felder für die Netzteilnehmer T₁ bis T₇. Ein zusätzliches Feld der Datenstruktur ist als Zählglied ausgeführt und dient zum Eintrag des aktuellen Iterationsschrittes. Da bei dem erfindungsgemäßen Verfahren das Broadcast-Datenpaket mehrfach gesendet wird, wird im Zusammenhang dieser Ausführungen jeder Sendeschritt mit einer Iterationsnummer gekennzeichnet. Bei dem dargestellten Ausführungsbeispiel beginnt die Iteration mit der Zahl "1". Da es sich bei dem erstmaligen Senden des Datenpaketes um den ersten Iterationsschritt handelt, steht das Zählglied der Datenstruktur auf "1".

Mit dem Senden des Datenpaketes setzt der Ursprungs-Netzteilnehmer T_{U} einen Ablaufzeitpunkt. Der Ablaufzeitpunkt wird in der Tabelle der Figur 1 als TO_{U} angegeben. Der Ablaufzeitpunkt TO_{U} wird man in Abhängigkeit von der Größe des Multi-Hop-Netzes wählen. Bei einem Netz mit etwa 250 Netzteilnehmern kann der Ablaufzeitpunkt T_{U} auf Werte zwischen 10 und 20 msec gesetzt werden. Bei dem dargestellten Ausführungsbeispiel wird der Ablaufzeitpunkt auf 10 msec gesetzt. Jeder Netzteilnehmer T₁ bis T₇, der dieses Broadcast-Datenpaket zum ersten Mal des sich über Flooding innerhalb des Netzes ausbreitenden Datenpaketes erhält, setzt sich einen Verzögerungszeittimer T_{V} und einen Ablaufzeitpunkt TO_{T}. Die Verzögerungszeit ist zufällig gewählt und dient dem Zweck, dass ein Teilnehmer seine Empfangsbestätigung nicht unverzüglich mit dem erstmaligen Erhalt des Datenpaketes sendet, sondern erst nach Ablauf dieser Verzögerungszeit. Durch den Ablaufzeitpunkt TO_{T} ist diejenige Zeitspanne begrenzt, in der der jeweilige Teilnehmer T₁ bis T₇ in das Flooding des Broadcast-Datenpaketes und das Empfangsbestätigungsverfahren eingebunden ist. Ist der Ablaufzeitpunkt erreicht, beteiligt sich dieser Teilnehmer T₁ bis T₇ in Bezug auf denjenigen Iterationsschritt, zu dem dieser Timer TO_{T} gesetzt worden ist, nicht mehr an der Kommunikation. Die Zeitspanne bis zum Ablauf des Ablaufzeitpunktes TO_{T} wird man nicht länger wählen als die im Ursprungs-Netzteilnehmer T_{U} gesetzte Ablaufzeit. Vielmehr kann diese Zeitspanne etwas kürzer bemessen sein, um z.B. Signallaufzeiten zu berücksichtigen Bei dem dargestellten Ausführungsbeispiel beträgt dieser Ablaufzeitpunkt 8 msec.

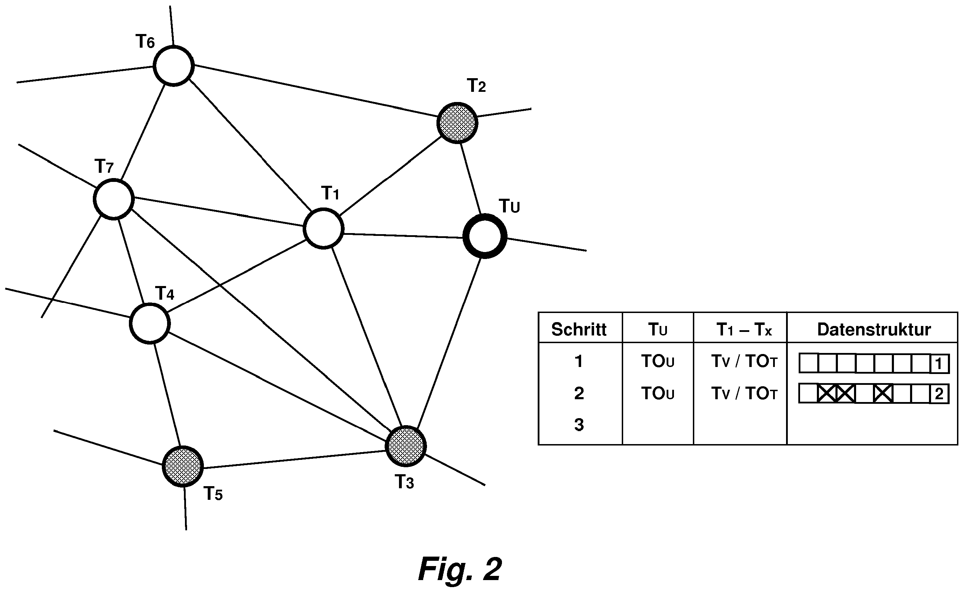

Nach Ablauf der Ablaufzeit im Ursprungs-Netzteilnehmer T_{U} ermittelt dieser, von welchen Teilnehmern T₁ bis T₇ er Empfangsbestätigungen erhalten hat. Bei dem in den Figuren dargestellten Ausführungsbeispiel hat der Ursprungs-Netzteilnehmer T_{U} im Wege dieses ersten Iterationsschrittes Empfangsbestätigungen von den Netzteilnehmern T₂, T₃ und T₅ erhalten. Somit fehlen für den erfolgreichen Abschluss des Verfahrens noch Empfangsbestätigungen der Netzteilnehmer T₁, T₄, T₆ und T₇. Da noch nicht von allen Netzteilnehmer T₁ bis T₇ Empfangsbestätigungen vom Ursprungs-Netzteiler T_{U} erhalten worden sind, wird ein zweiter Iterationsschritt gestartet. Der Ursprungs-Netzteilnehmer T_{U} sendet erneut die an die Netzteilnehmer T₁ bis T₇ zu übermittelnde Kommunikation, die in diesem zweiten Iterationsschritt als zusätzliche Information in dem Zählglied der Datenstruktur die Zahl "2" für den zweiten Iterationsschritt ausweist und in deren Bitmaske diejenigen Adresspositionen markiert sind, von denen der Ursprungs-Netzteilnehmer T_{U} bereits eine Empfangsbestätigung erhalten hat. Aus diesem Grunde sind die Adressstellen der Netzteilnehmer T₂, T₃ und T₅ entsprechend markiert (siehe Figur 2). Der Ursprungs-Netzteilnehmer T_{U} setzt sich mit dem Senden im zweiten Iterationsschritt wiederum einen Ablaufzeitpunkt. Die bemessene Zeitspanne entspricht bei dem beschriebenen Ausführungsbeispiel derjenigen des ersten Iterationsschrittes. Jeder Netzteilnehmer T₁ bis T₇, dessen Adressfeld in der Bitmaske der mitgesendeten Datenstruktur noch nicht markiert ist verfährt, wie dieses in dem ersten Iterationsschritt beschrieben ist und setzt sich einen Timer für eine zufällig gewählte Verzögerungszeit T_{V} sowie wiederum einen Ablaufzeitpunkt TO_{T}. Diejenigen Teilnehmer, von denen der Ursprungs-Teilnehmer T_{U} bereits eine Empfangsbestätigung erhalten hatte - die Netzteilnehmer T₂, T₃, T₅ - beteiligen sich an dem durch den zweiten Iterationsschritt ausgelösten Empfangsbestätigungsverfahren nicht aktiv. Dieses bedeutet, dass von diesen Netzteilnehmern T₂, T₃, T₅ keine eigene Empfangsbestätigung mehr gesendet wird. Diese Netzteilnehmer T₂, T3, T₅ bleiben gleichwohl in die Netzkommunikation zum Weiterleiten empfangener Nachrichten bzw. Empfangsbestätigungen anderer Netzteilnehmer beteiligt. Somit wird bereits bei dem zweiten Iterationsschritt deutlich, dass die Netzlast bei diesem Empfangsbestätigungsverfahren dadurch deutlich reduziert wird, dass nur diejenigen Netzteilnehmer auf den Broadcast antworten, von denen der Ursprungs-Netzteilnehmer T_{U} noch keine Empfangsbestätigung erhalten hat. An dem Empfangsbestätigungsverfahren des zweiten Iterationsschrittes beteiligen sich auch diejenigen Netzteilnehmer, die in ihrem Empfangsbestätigungsspeicher eine Empfangsbestätigung eines Netzteilnehmers abgelegt haben, wenn ein solcher Netzteilnehmer zu den in dem zweiten Iterationsschritt designierten Netzteilnehmern zählt.

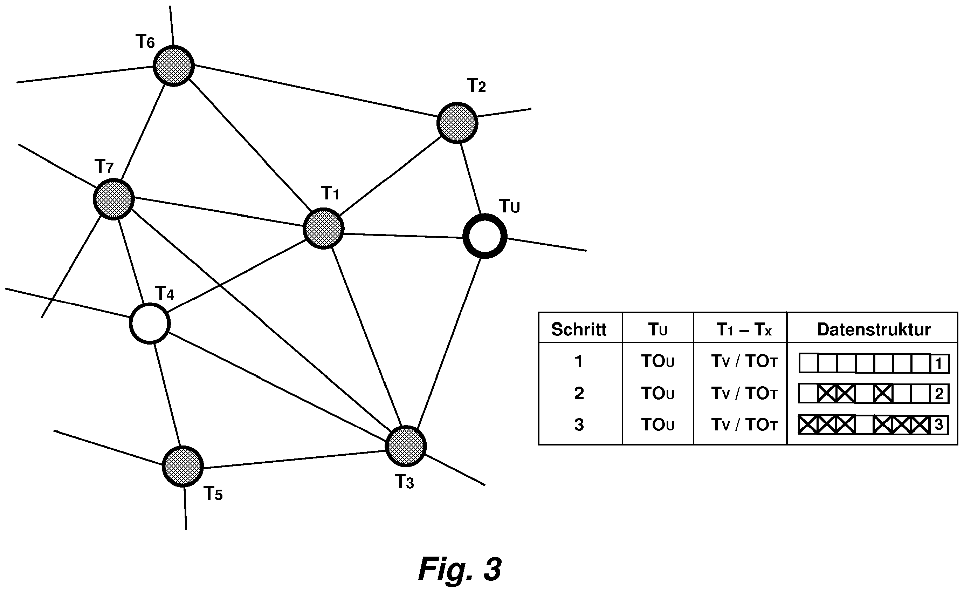

Ist im Ursprungs-Netzteilnehmer T_{U} die Ablaufzeit des zweiten Iterationsschrittes abgelaufen, wird erneut ermittelt, von welchen weiteren Netzteilnehmern er Empfangsbestätigungen erhalten hat. Im vorliegenden Fall hat der Ursprungs-Netzteilnehmer T_{U} im zweiten Iterationsschritt Empfangsbestätigungen der Teilnehmer T₁, T₆, und T₇ erhalten. Somit fehlt noch die Empfangsbestätigung des Netzteilnehmers T₄. Folglich wird ein dritter Iterationsschritt gestartet, der analog dem zweiten Iterationsschritt durchgeführt wird, und zwar mit einer Datenstruktur, in deren Bitmaske sodann die Adressfelder der Netzteilnehmer T₁, T₂, T₃, T₅, T₆ und T₇ markiert sind und in deren Zählglied die laufende Nummer des Iterationsschrittes, hier: 3 enthalten sind (siehe Figur 3). Somit antwortet aktiv bei diesem dritten Iterationsschritt nur noch der Netzteilnehmer T₄, wenn er die Kommunikation empfangen hat und die von ihm zufällig gewählte Verzögerungszeit abgelaufen ist. Bei dem dargestellten Ausführungsbeispiel empfängt der Ursprungs-Netzteilnehmer T_{U} durch den dritten Iterationsschritt auch die Empfangsbestätigung des Teilnehmers T₄, sodass er dann eine Empfangsbestätigung aller Netzteilnehmer T₁ bis T₇ erhalten hat. Mit der Feststellung, dass der Ursprungs-Netzteilnehmer T_{U} Empfangsbestätigungen von allen Netzteilnehmern erhalten hat, ist das Verfahren erfolgreich beendet, mithin die Kommunikation erfolgreich an alle Netzteilnehmer T₁ bis T₇ übertragen wurden.

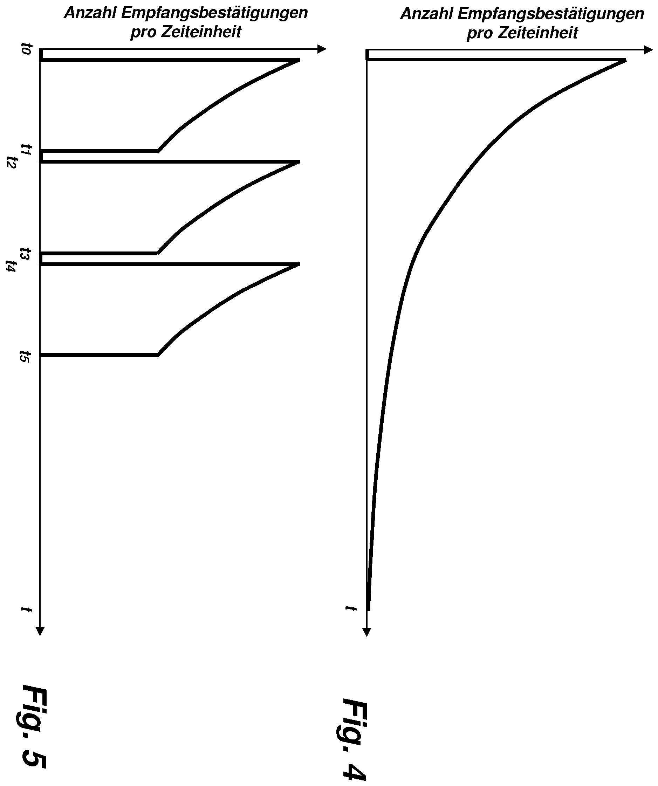

Figur 4 zeigt in einer schematisierten Darstellung ein Diagramm, mit dem sich anschaulich die Dauer des Einsammelns von Empfangsbestätigungen bei herkömmlichen Empfangsbestätigungsverfahren visualisieren lässt. Nach einem sich kurz nach dem Senden eines Broadcasts anschließenden Maximum der pro Zeiteinheit empfangenen Empfangsbestätigungen reduziert sich diese Anzahl asymptotisch gegen Null, und zwar bis die Empfangsbestätigung des letzten Netzteilnehmers vom Ursprungs-Netzteilnehmer empfangen worden ist. Mit zunehmender Zeit des laufenden Empfangsbestätigungsverfahrens nimmt im Multi-Hop-Netz die Anzahl der Kollisionen zu. Bei herkömmlichen Verfahren ist bei der Bestimmung des Ablaufzeitpunktes auch zu berücksichtigen, dass Netzteilnehmer gemäß dem CSMA-Verfahren wiederholt versuchen, ein Empfangsbestätigungssignal abzusetzen, wenn dieses bei einem ersten Versuch oder einem weiteren Versuch nicht erfolgreich vorgenommen werden konnte. Dieses begründet die notwendig lang zu bemessende Wartezeit. Gerade bei größeren Netzen kann dieses rasch zu einer Netzüberlastüng führen. Dieses ist von dem Ursprungs-Netzteilnehmer zu berücksichtigen, weshalb die Wartezeit, bis zum Empfangen der letzten Empfangsbestätigung entsprechend lang bemessen sein muss.

Bei einem Multi-Hop-Netz mit 250 Teilnehmern wird man daher bei herkömmlichen Empfangsbestätigungsverfahren den Ablaufzeitpunkt nicht vor Ablauf von mehreren Sekunden, beispielsweise 5 Sekunden setzen, wenn man mit einer Wahrscheinlichkeit von 99 % innerhalb der gesetzten Ablaufzeit die Empfangsbestätigungen aller Netzteilnehmer erhalten möchte. Hat nach Ablauf dieser Ablaufzeit der Ursprungsnetzteilnehmer nicht die Empfangsbestätigungen aller Netzteilnehmer erhalten, wird das gesamte Verfahren wiederholt. Bei ungünstigen Übertragungsverhältnisses kann dieses zu einer mehrmaligen Wiederholung des Sendens der Kommunikation und des sich daran anschließenden Empfangsbestätigungsverfahrens führen.

Figur 5 zeigt schematisiert die bevorzugte Ausführung des erfindungsgemäßen Verfahrens mit seinen mehreren Iterationsschritten und kurz gewähltem Ablaufzeitpunkten. Die Gegenüberstellung zu der Figur 4 zeigt deutlich, dass bei dem erfindungsgemäße Verfahren in Folge der im Ursprungs-Netzteilnehmer T_{U} gesetzten Ablaufzeit nur jeweils der erste Teil der Kurve der Figur 4 genutzt wird, und zwar derjenige Abschnitt, in dem eine hohe Anzahl an Empfangsbestätigungen pro Zeiteinheit zu beobachten sind. Die Gegenüberstellung der Kurve der Figur 5 ist in Bezug auf die Zeit-Achse (t-Achse) nicht maßstabsgerecht zu der Darstellung der Figur 4, sondern in dieser Richtung vergrößert. Deutlich erkennbar sind die drei, bei dem beschriebenen Ausführungsbeispiel vorgenommenen Iterationsschritte, wobei die Zeitspanne t₀ bis t₁ beispielhaft die Ablaufzeitspanne im Ursprungs-Netzteilnehmer T_{U} während des ersten Iterationsschrittes bildet. Unter Berücksichtigung, dass die Ablaufzeit des Ursprungs-Netzteilnehmers T_{U} bei dem dargestellten Ausführungsbeispiel mit 10 msec gewählt worden ist, hat der Ursprungs-Netzteilnehmer T_{U} mit dem erfindungsgemäßen Verfahren die Empfangsbestätigungen sämtlicher Netzteilnehmer bereits nach einem Bruchteil der Zeit erhalten, die mit herkömmlichen Verfahren benötigt werden würde. Die geringe Differenz zu der reinen Summe der Ablaufzeiten ist durch die zwischenzeitlich Auswertung der Empfangsbestätigungen begründet. Bei einem Multi-Hop-Netz von 250 Knoten als Vergleichsnetz zu dem zum Stand der Technik zuvor Beschriebenen werden mit einer Wahrscheinlichkeit von 100 % innerhalb von 0,5 bis etwa 1,2 sec. die Empfangsbestätigungen aller Netzteilnehmer erhalten. Dieses ist in zweifacher Hinsicht bemerkenswert. Zum einen beträgt bei dem erfindungsgemäßen Verfahren die Wahrscheinlichkeit des Erhalts der Empfangsbestätigungen aller Netzteilnehmer 100 %, und zwar trotz der sehr kurzen Zeitspanne. Der Unterschied in der Dauer des Verfahrens wird nochmals größer, wenn bei dem herkömmlichen Verfahren ein oder zwei Wiederholungen vorgenommen werden müssen. Es versteht sich, dass diese Untersuchungen voraussetzen, dass in der Kommunikation im Multi-Hop-Netz keine nicht behebbaren Fehler vorliegen. Im Ergebnis macht diese Gegenüberstellung in der Verfahrensweise des erfindungsgemäßen Verfahrens gemäß Figur 5 gegenüber herkömmlichen Verfahren gemäß Figur 4 deutlich, dass mit erfindungsgemäßen Verfahren Empfangsbestätigungen signifikant rascher eingesammelt werden können. Zugleich wird sichergestellt, dass durch das mehrfache Senden des Broadcast-Datenpaketes alle Netzteilnehmer dieses erhalten, wodurch durch das Flooding verursachte Übertragungsfehler, die zu dem Nicht-Erhalt des Broadcastes bei einem oder mehreren Netzteilnehmern führen kann, automatisch geheilt werden.

## Patentansprüche

1. Verfahren zum Übermitteln von Empfangsbestätigungen bei einer Broad- oder Multicast-Kommunikation in einem, insbesondere drahtlosen Multi-Hop-Netz, bei welchem Verfahren von jedem Netzteilnehmer (T₁ - T₇) nach Ablauf einer zufällig gewählten Verzögerungszeit eine Empfangsbestätigung gesendet wird, wobei der die Broad- oder Multicast-Kommunikation sendende Ursprungs-Netzteilnehmer (T_{U}) die Kommunikation in zumindest einem Iterationsschritt mit zeitlichem Abstand zu der ersten Kommunikation mit der zusätzlichen Information, von welchem Netzteilnehmer (T₁ - T₇) der Ursprungs-Netzteilnehmer (T_{U}) bereits eine Empfangsbestätigung erhalten hat, nochmals sendet, wenn der Ursprungs-Netzteilnehmer (T_{U}) innerhalb einer von ihm festgelegten Ablaufzeit noch nicht die Empfangsbestätigungen aller designierter Netzteilnehmer (T₁ - T₇) erhalten hat, wobei der Ursprungs-Netzteilnehmer (T_{U}) im zeitlichen Zusammenhang mit dem Senden der Kommunikation mit jedem Iterationsschritt einen Ablaufzeitpunkt festlegt, bis zu welchem Ablaufzeitpunkt der Ursprungs-Netzteilnehmer (T_{U}) Empfangsbestätigungen von den durch die Kommunikation angesprochenen Netzteilnehmern (T₁ - T₇) zur Verwendung einer nachfolgenden Auswertung annimmt, und wobei mit oder kurz nach dem Ablauf dieser Zeitspanne der Ursprungs-Netzteilnehmer (T_{U}) ermittelt, von welchen durch die Kommunikation angesprochenen Netzteilnehmern (T₁ - T₇) er eine Empfangsbestätigung erhalten hat, und dass der Ursprungs-Netzteilnehmer (T_{U}) in dem nachfolgenden Iterationsschritt die Kommunikation zusammen mit der zusätzlichen Information sendet, von welchem Netzteilnehmer (T₁ - T₇) er bereits eine Empfangsbestätigung erhalten hat, wobei auf das wiederholte Senden der Kommunikation in diesem nachfolgenden Iterationsschritt nur diejenigen Netzteilnehmer (T₁ - T₇), von denen beim vorangegangenen Iterationsschritt der Ursprungs-Netzteilnehmer (T_{U}) noch keine Empfangsbestätigung erhalten hatte, und diejenigen Netzteilnehmer antworten, die in einem Empfangsbestätigungsspeicher eine Empfangsbestätigung zumindest eines weiteren Netzteilnehmers (T₁ - T₇) gespeichert haben, die der Ursprungs-Netzteilnehmer (T_{U}) noch nicht erhalten hatte, wobei mit dem Ablauf der Ablaufzeit dieses weiteren Iterationsschrittes der Ursprungs-Netzteilnehmer (T_{U}) ermittelt, von welchen weiteren Netzteilnehmern (T₁ - T₇) eine Empfangsbestätigung empfangen worden ist und für den Fall, dass der Ursprungsteilnehmer (T_{U}) nach dem weiteren Iterationsschritt noch nicht von allen designierten Netzteilnehmern (T₁ - T₇) eine Empfangsbestätigung erhalten hat, weitere Iterationsschritte mit der jeweils kumulierten zusätzlichen Information durchgeführt werden, wobei die Iterationen weitergeführt werden, bis entweder der Ursprungs-Netzteilnehmer (T_{U}) eine Empfangsbestätigung von jedem designierten Netzteilnehmer (T₁ - T₇) erhalten hat oder eine vorgegebene Anzahl an Iterationsschritten durchgeführt worden ist oder eine vorgegebene maximale Zeit am Ursprungs-Netzteilnehmer (T_{U}) verstrichen ist.

2. Verfahren nach Anspruch 1, **dadurch gekennzeichnet, dass** der Ablaufzeitpunkt, der durch den Ursprungs-Netzteilnehmer (T_{U}) festgelegt wird, in Abhängigkeit von der Struktur und der Größe des Multi-Hop-Netzes so bemessen ist, dass der Ursprungs-Netzteilnehmer (T_{U}) innerhalb dieser Zeit nicht die Empfangsbestätigung der designierten Netzteilnehmer erhalten kann.

3. Verfahren nach Anspruch 1 oder 2, **dadurch gekennzeichnet, dass** für die beginnend mit dem zweiten Iterationsschritt gesendete zusätzliche Information eine Datenstruktur verwendet wird, die hinreichend groß ist, um darin die Adressinformation aller Netzteilnehmer (T₁ - T₇) des Multi-Hop-Netzes abzubilden und in der diejenigen Netzteilnehmer (T₁ - T₇) angeben sind, von denen der Ursprungs-Netzteihehmer (T_{U}) bereits eine Empfangsbestätigung erhalten hat.

4. Verfahren nach Anspruch 3, **dadurch gekennzeichnet, dass** die Datenstruktur ausgelegt ist, damit in dieser nach Art einer Bitmaske, die Anzahl der Netzteilnehmer (T_{U}) des Multi-Hop-Netzes abgebildet werden können und die Datenstruktur zuzüglich der Möglichkeit bietet, die Nummer des aktuellen Iteratiönsschrittes darin abbilden zu können.

5. Verfahren nach einem der Ansprüche 1 bis 4, **dadurch gekennzeichnet, dass** die mit jedem Iterationsschritt von dem Ursprungs-Netzteilnehmer gesetzte Ablaufzeit gleich lang bemessen ist.

6. Verfahren nach Anspruch 4, **dadurch gekennzeichnet, dass** die mit jedem Iterationsschritt von dem Ursprungs-Netzteilnehmer gesetzte Ablaufzeit gleich lang ist, solange mit jedem Iterationsschritt von dem Ursprungs-Netzteilnehmer (T_{U}) neue Empfangsbestätigungen empfangen werden.

7. Verfahren nach einem der Ansprüche 1 bis 6, **dadurch gekennzeichnet, dass** mit jedem Iterationsschritt eine Information seitens des Ursprungs-Netzteilnehmers (T_{U}) gesendet wird, um den wievielten Iterationsschritt es sich bei dem Senden der Kommunikation handelt.

8. Verfahren nach einem der Ansprüche 1 bis 7, **dadurch gekennzeichnet, dass** jeder Netzteilnehmer (T₁ - T₇) mit dem erstmaligen Empfang einer Kommunikation sich einen Ablauf-Timer setzt, dessen Ablaufzeitpunkt nach der zufällig gewählten, Verzögerungszeit endet, nach dessen Ablauf der Netzteilnehmer (T₁ - T₇) seine Beteiligung an der Kommunikation und an der Übermittlung bzw. Weiterleitung von Empfangsbestätigungen anderer Netzteilnehmer (T₁ - T₇) beendet, wobei in seinem Empfangsbestätigungsspeicher abgelegte Empfangsbestätigungen zur Verwendung in dem nächsten Iterationsschritt beibehalten bleiben.

9. Verfahren nach einem der Ansprüche 1 bis 8, **dadurch gekennzeichnet, dass** die Anzahl der durchzuführenden weiteren Iterationsschritte, die durchgeführt werden, wenn der Ursprungs-Netzteilnehmer noch nicht die Empfangsbestätigung aller designierter Netzteilnehmer (T₁ - T₇) erhalten hat, von den in einer vorgegebenen Anzahl von vorangegangenen Iterationsschritten von dem Ursprungs-Netzteilnehmer (T_{U}) erhaltenen Empfangsbestätigungen abhängig ist.

10. Verfahren nach Anspruch 9, **dadurch gekennzeichnet, dass** nach Durchführen einer vorgegebenen Anzahl von Iterationsschritten, in denen der Ursprungs-Netzteilnehmer (T_{U}) keine neuen Empfangsbestätigungen oder eine kleiner werdende Anzahl an Empfangsbestätigungen erhalten hat, die Ablaufzeit für eine vorgegebene Anzahl an Iterationsschritten verlängert wird, bevor das Verfahren beendet wird, unabhängig davon, ob der Ursprungs-Netzteilnehmer (Tu) die noch fehlenden Empfangsbestätigungen erhalten hat oder nicht.

11. Verfahren nach einem der Ansprüche 1 bis 10, **dadurch gekennzeichnet, dass** die von dem Ursprungs-Netzteilnehmer (T_{U}) gesetzte Ablaufzeit zumindest der Laufzeit der Kommunikation zuzüglich der maximalen Verzögerungszeit beträgt.

12. Verfahren nach einem der Ansprüche 1 bis 11, **dadurch gekennzeichnet, dass** von einem Netzteilnehmer (T₁ - T₇) erhaltene Empfangsbestätigungen anderer Netzteilnehmer (T₁ - T₇) in ihrem Cache als Empfangsbestätigungsspeicher abgelegt werden.

13. Verfahren nach einem der Ansprüche 1 bis 12, **dadurch gekennzeichnet, dass**
- dass jeder Netzteilnehmer (T₁ - T₇) während der laufenden Verzögerungszeit empfangene Empfangsbestätigungen anderer Netzteilnehmer (T₁ - T₇) daraufhin untersucht, ob darin eine Absenderinformation enthalten ist, die dieser Netzteilnehmer (T₁ - T₇) noch nicht erhalten hat, und wenn eine solche empfangene Empfangsbestätigung eine neue Absenderinformation enthält, die neue Absenderinformation in einem Empfangsbestätigungsabsenderspeicher abgelegt sowie eine neue, zufällig gewählte Verzögerungszeit zum Senden der eigenen Empfangsbestätigung gesetzt wird, wobei sich dieser Vorgang mit jeder während der aktuell laufenden Verzögerungszeit empfangenen Empfangsbestätigung eines anderen Netzteilnehmers (T₁ - T₇) wiederholt,
- dass mit Ablauf der laufenden Verzögerungszeit dieser Netzteilnehmer (T₁ - T₇) eine Empfangsbestätigung sendet, die seine eigene Adressinformation und die in seinem Empfangsbestätigungsabsenderspeicher abgelegte Absenderinformation beinhaltet und
- dass eine neue zufällig ausgewählte Verzögerungszeit im Rahmen der aktuell laufenden Empfangsbestätigungsübermittlung nur dann gesetzt und eine weitere Empfangsbestätigung gesendet wird, wenn nach dem Senden der ersten eigenen Empfangsbestätigung eine Empfangsbestätigung eines anderen Netzteilnehmers (T₁ - T₇) mit neuer Absenderinformation empfangen wird, wobei sich in einem solchen Falle die vorherigen Schritte wiederholen.

14. Verfahren nach Anspruch 13, **dadurch gekennzeichnet, dass** die zufällig gewählte Verzögerungszeit, nach deren Ablauf eine Empfangsbestätigung gesendet wird, umso kürzer gewählt wird, je größer die Anzahl der im Empfangsbestätigungsabsenderspeicher abgelegten Absender ist.

15. Verfahren nach Anspruch 13, **dadurch gekennzeichnet, dass** eine zufällig gewählte Verzögerungszeit durch Dividieren derselben durch die Anzahl der im Empfangsbestätigungsabsenderspeicher abgelegten Adressen geändert wird.

16. Verfahren nach einem der Ansprüche 13 bis 15, **dadurch gekennzeichnet, dass** ein Netzteilnehmer (T₁ - T₇) eine Empfangsbestätigung bereits vor Ablauf der laufenden Verzögerungszeit sendet, wenn die in seinem Empfangsbestätigungsabsenderspeicher abgelegten Absender eine vorbestimmte Anzahl erreicht hat.

17. Verfahren nach einem der Ansprüche 13 bis 16, **dadurch gekennzeichnet, dass** für die Absenderinformation jedes Netzteilnehmers (T₁ - T₇) eine Bitmaske verwendet wird, die hinreichend groß ist, um darin die Adressinformation aller Netzteilnehmer (T₁ - T₇) abzubilden.

## Claims

1. Method for transmitting acknowledgements of receipt in a broadcast or multicast communication in a, in particular wireless multi-hop-network, in which method an acknowledgement of receipt is transmitted by each network subscriber (T₁ - T₇) after the expiry of a randomly selected delay time, wherein the originating network subscriber (Tu) transmitting the broadcast or multicast communication again transmits the communication in at least one iteration step at a time interval after the first communication with the additional information, from which network subscriber (T₁ - T₇) the originating network subscriber (Tu) has already received an acknowledgement of receipt, if the originating network subscriber (Tu) has not yet received the acknowledgements of receipt of all designated network subscribers (T₁ - T₇) within an expiry time defined by it, wherein the originating network subscriber (Tu) specifies an expiry time in connection with the transmission of the communication with each iteration step, up to which expiry time the originating network subscriber (Tu) accepts acknowledgements of receipt from the network subscribers (T₁ - T₇) addressed by the communication for the use of a subsequent evaluation, and wherein at or shortly after the expiry of this time period the originating network subscriber (Tu) determines from which network subscribers (T₁ - T₇) addressed by the communication it has received an acknowledgement of receipt, and that the originating network subscriber (Tu) in the subsequent iteration step sends the communication together with the additional information, from which network subscriber (T₁ - T₇) it has already received an acknowledgement of receipt, wherein only those network subscribers (T₁ - T₇) from which the originating network subscriber (Tu) had not yet received an acknowledgement of receipt in the previous interation step and those network subscribers which have stored in an acknowledgement of receipt memory an acknowledgement of receipt of at least one further network subscriber (T₁ - T₇) which the originating network subscriber (Tu) had not yet received respond to the repeated transmission of the communication in this subsequent iteration step, wherein the original network subscriber (Tu) determines with the expiry of the expiry time of this further iteration step, from which further network subscribers (T₁ - T₇) an acknowledgement of receipt has been received and, in the event that the originating subscriber (Tu) has not yet received an acknowledgement of receipt from all designated network subscribers (T₁ - T₇) after the further iteration step, further iteration steps are carried out with the respective accumulated additional information, wherein the iterations are carried on until either the originating subscriber (Tu) has received an acknowledgement of receipt from each designated network subscriber (T₁ - T₇) or a predefined number of iteration steps has been carried out or a predefined maximum time has passed at the originating network subscriber (Tu).

2. Method in accordance with Claim 1, **characterized by the fact** that the expiry time, which is determined by the originating network subscriber (Tu), is dimensioned as a function of the structure and the size of the multi-hop network such that the originating network subscriber (Tu) cannot receive the acknowledgement of receipt of the designated network subscribers within this time.

3. Method in accordance with Claim 1 or 2, **characterized by the fact** that for the additional information sent beginning with the second iteration step, a data structure is used which is sufficiently large to map therein the address information of all network subscribers (T₁ - T₇) of the multi-hop network and in which those network subscribers (T₁ - T₇) are indicated from which the originating network subscriber (Tu) has already received an acknowledgement of receipt.

4. Method in accordance with Claim 3, **characterized by the fact** that the data structure is designed so that the number of network subscribers (Tu) of the multi-hop network can be mapped in it in the manner of a bit mask and the data structure offers the possibility of mapping the number of the current iteration step in it.

5. Method in accordance with any of Claims 1 to 4, **characterized by the fact** that the expiry time set with each iteration step by the originating network subscriber is of equal length.

6. Method in accordance with Claim 4, **characterized by the fact** that the expiry time set with each iteration step by the originating network subscriber is of the same length as long as new acknowledgements of receipt are received with each iteration step by the originating network subscriber (Tu).

7. Method in accordance with any of Claims 1 to 6, **characterized by the fact** that with each interation step an information is sent by the originating network subscriber (Tu) as to which iteration step is involved in sending the communication.

8. Method in accordance with any of Claims 1 to 7, **characterized by the fact** that each network subscriber (T₁ - T₇) sets itself an expiry timer with the first reception of a communication, the expiry time point of which timer ends after the randomly selected delay time, after the expiry of which timer the network subscriber (T₁ - T₇) ends its participation in the communication and in the transmission or forwarding of acknowledgements of other network subscribers (T₁ - T₇), wherein acknowledgements stored in its acknowledgement memory are retained for use in the next iteration step.

9. Method in accordance with any of Claims 1 to 8, **characterized by the fact** that the number of further iteration steps to be performed when the originating network subscriber has not yet received the acknowledgement of receipt of all designated network subscribers (T₁ - T₇) is dependent on the acknowledgements of receipt received by the originating network subscriber (Tu) in a pedetermined number of previous iteration steps.

10. Method in accordance with Claim 9, **characterized by the fact** that, after a predetermined number of iteration steps have been performed, in which the originating network subscriber (Tu) has not received any new acknowledgements or has received a decreasing number of acknowledgements, the expiry time is extended for a predetermined number of iteration steps before the method is terminated, irrespective of whether the originating network subscriber (Tu) has received the still missing acknowledgements or not.

11. Method in accordance with any of Claims 1 to 10, **characterized by the fact** that the expiry time set by the originating network subscriber (Tu) is at least equal to the duration of the communication plus the maximum delay time.

12. Method in accordance with any of Claims 1 to 11, **characterized by the fact** that acknowledgements of receipt received by a network subscriber (T₁ - T₇) from other network subscribers (T₁ - T₇) are stored in their cache as acknowledgement memory.

13. Method in accordance with any of Claims 1 to 12, **characterized by the fact**
- that each network subscriber (T₁ - T₇) examines acknowledgements of receipt received from other network subscribers (T₁ - T₇) during the current delay time to see whether they contain sender information which this network subscriber (T₁ - T₇) has not yet received, and if such a received acknowledgement of receipt contains new sender information, the new sender information is stored in an acknowledgement sender memory and a new, randomly selected delay time is set for sending the own acknowledgement of receipt, wherein this process is repeated with each acknowledgement of receipt of another network subscriber (T₁ - T₇) received during the currently running delay time,
- that, when the current delay time expires, this network subscriber (T₁ - T₇) sends an acknowledgement of receipt which contains its own address information and the sender information stored in its acknowledgement sender memory and
- that a new randomly selected delay time is set in the context of the currently running acknowledgement transmission and a further acknowledgement is sent only if, after the first own acknowledgement has been sent, an acknowledgement from another network subscribers (T₁ - T₇) with new sender information is received, the previous steps being repeated in such a case.

14. Method in accordance with Claim 13, **characterized by the fact** that the randomly selected delay time, after the expiry of which an acknowledgement of receipt is sent, is selected to be shorter the greater the number of senders stored in the acknowledgement sender memory.

15. Method in accordance with Claim 13, **characterized by the fact** that a randomly selected delay time is changed by dividing it by the number of addresses stored in the acknowledgement sender memory.

16. Method in accordance with any of Claims 13 to 15, **characterized by the fact** that a network subscriber (T₁ - T₇) sends an acknowledgement of receipt even before the current delay time has elapsed if the senders stored in its acknowledgement sender memory have reached a predetermined number.

17. Method in accordance with any of Claims 13 to 16, **characterized by the fact** that a bit mask is used for the sender information of each network subscriber (T₁ - T₇) which is sufficiently large to map the address information of all network subscribers (T₁ - T₇),

## Revendications

1. Procédé de transmission d'accusés de réception dans une communication à large diffusion ou multidiffusion dans un réseau multi-bonds sans fil, en particulier, procédé dans lequel un accusé de réception est envoyé par chaque abonné au réseau (T₁ - T₇) après l'écoulement d'un temps de retard choisi au hasard, dans lequel l'abonné au réseau d'origine (Tu) transmettant la communication large ou multidiffusion retransmet la communication dans au moins une étape d'itération à un intervalle de temps à partir de la première communication avec l'information supplémentaire de quel abonné au réseau (T₁ - T₇) l'abonné au réseau d'origine (Tu) a déjà reçu un accusé de réception, si l'abonné au réseau d'origine (Tu) n'a pas encore reçu les accusés de réception de tous les abonnés au réseau désignés (T₁ - T₇) dans un délai fixé par lui, dans lequel l'abonné au réseau d'origine (Tu), en relation temporelle avec la transmission de la communication, définit avec chaque étape d'itération une heure d'expiration jusqu'à laquelle l'abonné au réseau d'origine (Tu) accepte les accusés de réception des abonnés au réseau (T₁ - T₇) adressés par la communication pur l'utilisation d'une évaluation ultérieure, et dans lequel, à l'expiration de cet intervalle de temps ou peu après, l'abonné au réseau d'origine (Tu) détermine de quels abonnés au réseau (T₁ - T₇) adressés par la communication il a reçu un accusé de réception, et en ce que, dans l'étape d'itération suivante, l'abonné au réseau d'origine (Tu) envoie la communication avec les informations supplémentaires indiquant de quel abonné au réseau (T₁ - T₇) il a déjà reçu un accusé de réception, dans lequel seuls les abonnés au réseau (T₁ - T₇) dont l'abonné au réseau d'origine (Tu) n'avait pas encore reçu d'accusé de réception dans l'étape d'itération précédente et les abonnés au réseau qui ont enregistré dans une mémoire d'accusés de réception un accusé de réception d'au moins un autre abonné au réseau (T₁ - T₇) que l'abonné au réseau d'origine (Tu) n'avait pas encore reçu, réagissent à la transmission répétée de la communication dans cette étape d'intération suivante, dans lequel, à l'expiration du délai de cette nouvelle étape d'intération, l'abonné au réseau d'origine (Tu) détermine de quels autres abonnés au réseau (T₁ - T₇) un accusé de réception a été reçu et, dans le cas où l'abonné d'origine (Tu) n'a pas encore reçu d'accusé de réception de tous les abonnés au réseau désignés (T₁ - T₇) après la nouvelle étape d'itération, de nouvelles étapes d'itération sont effectuées avec les informations supplémentaires respectives accumulées, de lequel les itérations sont poursuivies jusqu'à ce que l'abonné au réseau d'origine (Tu) ait reçu un accusé de réception de chaque abonné au réseau désigné (T₁ - T₇) ou qu'un nombre prédéterminé d'étapes d'itération aient été effectuées ou qu'un temps maximum prédéterminé se soit écoulé chez l'abonné au réseau d'origine (Tu).

2. Procédé selon la revendication 1, **caractérisé en ce que** le délai d'expiration, qui est déterminé par l'abonné au réseau d'origine (Tu), est dimensionné en fonction de la structure et de la taille du réseau à bonds multiples de telle sorte que l'abonné au réseau d'origine (Tu) ne peut pas recevoir l'accusé de réception des abonnés au réseau désignés dans ce délai.

3. Procédé selon la revendication 1 or 2, **caractérisé en ce que** pour les informations supplémentaires envoyées à partir de la deuxième étape d'itération, on utilise une structure de données qui est suffisamment grande pour y faire figurer les informations d'adresse de tous les abonnés au réseau (T₁ - T₇) du réseau à bonds multiples, et dans laquelle sont spécifiés les abonnés au réseau (T₁ - T₇) dont l'abonné au réseau d'origine (Tu) a déjà reçu un accusé de réception.

4. Procédé selon la revendication 3, **caractérisé en ce que** la structure des données est conçue de manière à ce que le nombre d'abonnés (Tu) au réseau à bonds multiples puisse y être fait figurer à la manière d'un masque de bits, et la structure des données offre la possibilité d'y faire figurer le numéro de l'étape d'itération en cours.

5. Procédé selon l'une des revendications 1 à 4, **caractérisé en ce que** le délai d'expiration fixé à chaque étape d'itération par l'abonné au réseau d'origine est de longueur égale.

6. Procédé selon la revendication 4, **caractérisé en ce que** le délai d'expiration fixé à chaque étape d'itération par l'abonné au réseau d'origine est de la même longueur tant que de nouveaux accusés de réception sont reçus à chaque étape d'itération de la part de l'abonné au réseau d'origine (Tu).

7. Procédé selon l'une des revendications 1 à 6, **caractérisé en ce que,** à chaque étape d'itération, des informations sont envoyées par l'abonné au réseau d'origine (Tu) quant au numéro de l'étape d'itération qui intervient dans l'envoi de la communication.

8. Procédé selon l'une des revendications 1 à 7, **caractérisé en ce que** chaque abonné au réseau (T₁ - T₇) se fixe un délai d'expiration à la première réception d'une communication, délai dont l'expiration se termine après le délai choisi au hasard, délai après lequel l'abonné au réseau (T₁ - T₇) met fin à sa participation à la communication et à la transmission ou à l'envoi d'accusées de réception d'autres abonnés au réseau (T₁ - T₇), les accusés de réception stockés dans sa mémoire d'accusés de réception étant conservés pour être utilisés dans l'étape d'itération suivante.

9. Procédé selon l'une des revendications 1 à 8, **caractérisé en ce que** le nombre d'étapes d'itération supplémentaires à effectuer lorsque l'abonné au réseau d'origine n'a pas encore reçu l'accusé de réception de tous les abonnés au réseau désignés (T₁ - T₇) dépend des accusés de réception reçus de l'abonné au réseau d'origine (Tu) dans un nombre prédéterminé d'étapes d'itération précédentes.

10. Procédé selon la revendication 9, **caractérisé en ce que,** après l'exécution d'un nombre prédéterminé d'étapes d'itération au cours desquelles l'abonné au réseau d'origine (Tu) n'a pas reçu de nouvels accusés de réception ou a reçu un nombre décroissant d'accusés de réception, le délai d'expiration est prolongé pour un nombre prédéterminé d'étapes d'itération avant que le procédé ne soit terminé, indépendamment du fait que l'abonné au réseau d'origine (Tu) ait reçu ou non les accusés de réception ancore manquants.

11. Procédé selon l'une des revendications 1 à 10, **caractérisé en ce que** le délai d'expiration fixé par l'abonné au réseau d'origine (Tu) est au moins égal au temps de propagation de la communication plus le délai maximal.

12. Procédé selon l'une des revendications 1 à 11, **caractérisé en ce que** les accusés de réception reçus par un abonné au réseau (T₁ - T₇) en provenance d'autres abonnés au réseau (T₁ - T₇) sont stockés dans leur cache en tant que mémoire d'accusés de réception.

13. Procédé selon l'une des revendications 1 à 12, **caractérisé en ce que**
- chaque abonné au réseau (T₁ - T₇) examine les accusés de réception reçus d'autres abonnés au réseau (T₁ - T₇) pendant le délai actuel pour voir s'ils contiennent des informations sur l'émetteur que cet abonné au réseau (T₁ - T₇) n'a pas encore reçues, et si un tel accusé de réception reçu contient de nouvelles informations sur l'émetteur, les nouvelles informations relatives à l'émetteur sont stockées dans une mémoire d'émetteurs d'accusés de réception et un nouveau délai, choisi au hasard, est fixé pour l'envoi du propre accusé de réception, ce processus étant répété à chaque accusé de réception reçu d'un autre abonné au réseau (T₁ - T₇) pendant le délai en cours,
- à l'expiration du délai actuel, cet abonné au réseau (T₁ - T₇) envoie un accusé de réception qui contient ses propres informations d'adresse et les informations sur l'émetteur stockées dans sa mémoire d'émetteurs d'accusés de réception et
- une nouvelle durée de délai choisie au hasard est fixée dans le contexte de la transmission d'accusé de réception en cours et un nouvel accusé de réception n'est envoyé que si, après l'envoi du premier propre accusé de réception, un accusé de réception d'un autre abonné au réseau (T₁ - T₇) avec de nouvelles informations sur l'émetteur est reçu, les étapes précédentes étant répétées dans un tel cas.

14. Procédé selon la revendication 13, **caractérisé en ce que** le délai choisi au hasard, après l'expiration duquel un accusé de réception est envoyé, est choisi pour être d'autant plus court que le nombre d'émetteurs stockés dans la mémoire d'émetteurs d'accusés de réception est élevé.

15. Procédé selon la revendication 13, **caractérisé en ce qu'**un délai choisi au hasard est modifié en le divisant par le nombre d'adresses stockées dans la mémoire d'émetteurs d'accusés de réception.

16. Procédé selon l'une des revendications 13 à 15, **caractérisé en ce qu'**un abonné au réseau (T₁ - T₇) envoie un accusé de réception avant même que le délai actuel ne soit écoulé si le nombre d'émetteurs stockés dans sa mémoire d'émetteurs d'accusés de réception a atteint un nombre prédéterminé.

17. Procédé selon l'une des revendications 13 à 16, **caractérisé en ce que** pour les informations relatives à l'émetteur de chaque abonné au réseau (T₁ - T₇), on utilise un masque de bits qui est suffisamment grand pour y faire figurer les informations relatives à l'adresse de tous les abonnés au réseau (T₁ - T₇).
